# EUROPEAN PATENT APPLICATION

(11) **EP 1 161 038 A2**
(43) Date of publication of application: **05.12.2001**
(21) Application number: 01304797.2
(22) Date of filing: 31.05.2001
(51) Int. Cl.: H04L 12/64

(54) **Connection negotiation for voice over internet protocol using multiple steps**

(30) Priority: 31.05.2000 US 585248
(71) Applicant: Nortel Networks Limited, Montreal, Quebec H2Y 3Y4 (CA)
(72) Inventor: Couillaud, Pierre, Belleville, Ontario K8P 1T6 (CA); Pujic, Milos D, Bellville, Ontario K8P 4C6 (CA)
(74) Representative: Loven, Keith James

(57) **Abstract**

The present invention relates to a method and system to negotiation connection between an ingress endpoint and an egress endpoint associated with a network for a voice connection according to a control protocol. An egress codec is selected to satisfy a capability description of an ingress endpoint. The egress codec has an egress codec description. An ingress codec is selected to match a codec parameter subset from the egress codec description. Communication paths between the ingress and egress end-points are configured using the selected ingress and egress codecs, respectively, and the codec parameter subset.

## Description

### FIELD OF THE INVENTION

This invention relates to computer networks. In particular, the invention relates to voice over internet protocol.

### BACKGROUND TO THE INVENTION

Support of voice supplementary services in enterprise Voice Over Internet Protocol (VoIP) networks requires that call servers that provide call processing interact with each other via exchange of signaling messages. This allows services to be supported across a community of call servers rather than only within a single server.

Part of the voice media stream establishment between two endpoints in an internet protocol (IP) network includes a codec negotiation step. The codec negotiation is used to determine which voice codec to use for the media stream and to determine what values to be set for specific parameters. Current techniques do not provide complete definition of a total negotiation process in order to negotiate both voice codec and the related parameters. Therefore, a complete negotiation cannot be done between two endpoints and some default conditions have to be assumed by both ends.

Therefore, there is a need to have a technique that provides an efficient codec negotiation for voice connection.

### SUMMARY OF THE INVENTION

The present invention relates to a method and system to negotiate connection between an ingress endpoint and an egress endpoint associated with a network for a voice connection according to a control protocol. An egress codec is selected to satisfy a capability description of an ingress endpoint. The egress codec has an egress codec description. An ingress codec is selected to match a codec parameter subset from the egress codec description. Communication paths between the ingress and egress endpoints are configured using the selected ingress and egress codecs, respectively, and the codec parameter subset.

According to one embodiment of the present invention, a call bandwidth is specified to the ingress endpoint in a command sent by a call server at a media gateway controller. The ingress endpoint responds to the command with a response including the ingress codecs satisfying the specified call bandwidth. The response is forwarded to the egress endpoint. The egress codec is selected to match the ingress codec by the egress endpoint. The egress codec description is provided to correspond to the selected egress codec. The egress codec description is then forwarded to the ingress endpoint. The codec parameter subset is specified in the egress codec description. The codec parameter subset is confirmed by the ingress codec. The confirmed codec parameter subset is forwarded to the egress endpoint by the call server.

The advantages of the invention include: (1) flexibility in connection negotiation, and (2) ability for the gateway to adapt to the constraints of the network at the time of connection.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

The features and advantages of the present invention will become apparent from the following detailed description of exemplary embodiments of the present invention, in which:
Figure 1A is a diagram illustrating a system according to one embodiment of the invention.
Figure 1B is a diagram illustrating a computer system to implement the call server and the ingress and egress negotiation interfaces shown in Figure 1A according to one embodiment of the invention.
Figure 2 is a diagram illustrating the call server shown in Figure 1 according to one embodiment of the invention.
Figure 3 is a diagram illustrating the ingress negotiation interface shown in Figure 1 according to one embodiment of the invention.
Figure 4 is a diagram illustrating the egress negotiation interface shown in Figure 1 according to one embodiment of the invention.
Figure 5A is a flow diagram illustrating the first step of the negotiate process according to one embodiment of the invention.
Figure 5B is a flow diagram illustrating the second step of the negotiate process according to one embodiment of the invention.

### DETAILED DESCRIPTION OF THE ILLUSTRATED EMBODIMENTS

The present invention relates to a method and system to negotiate connection between an ingress endpoint and an egress endpoint associated with a network for a voice connection according to a control protocol. An egress codec is selected to satisfy a capability description of an ingress endpoint. The egress codec has an egress codec description. Ingress codec parameters are selected to match a codec parameter subset from the egress codec description. Communication paths between the ingress and egress endpoints are configured using the selected ingress and egress codecs, respectively, and the codec parameter subset.

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the method is implemented in a station as a software routine, hardware circuit, firmware, or a combination thereof.

Embodiments of the invention may be represented as a software product stored on a machine-readable medium (also referred to as a computer-readable medium, a processor-readable medium, or a computer usable medium having a computer readable program code embodied therein). The machine-readable medium may be any type of magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data. Those of ordinary skill in the art will appreciate that other instructions and operations necessary to implement the described invention may also be stored on the machine-readable medium.

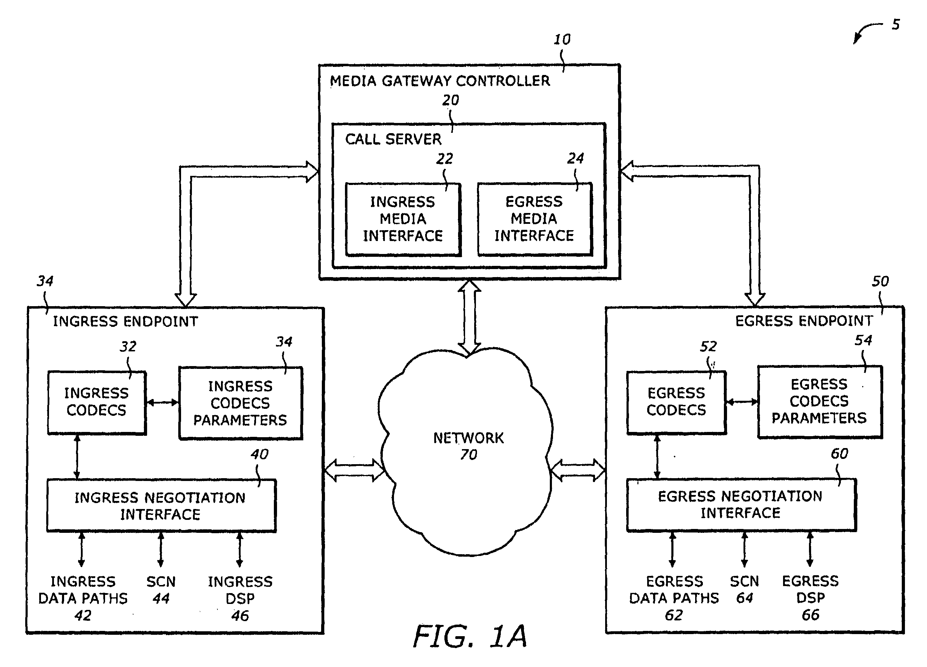

Figure 1A is a diagram illustrating a system 5 according to one embodiment of the invention. The system 5 includes a media gateway controller 10, an ingress endpoint 30, an egress endpoint 50, and a network 70.

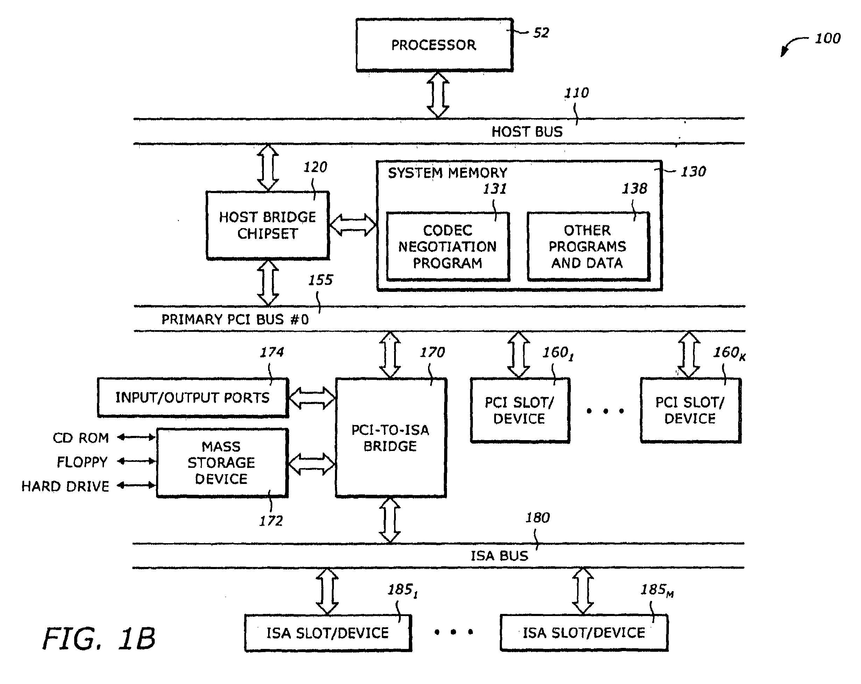

The media gateway controller 10 controls endpoints in the network 70. The media gateway controller 10 may interface to the ingress or egress endpoints 30 and 50 directly, or via the network 70. The media gateway controller 10 includes a call server 20. The call server 20 is a server to establish the calls between endpoints of network 70. The call server 20 is typically a computer system one embodiment of which is illustrated in Figure 1B. The call server 20 includes an ingress media interface 22 and an egress media interface 24. The ingress and egress media interfaces 22 and 24 are not necessarily two disjoint modules and may be part of a common interface module. This common interface module may at one time act as the ingress media interface 22 and at another act as the egress media interface 24. The ingress and egress media interfaces 22 and 24 interfaces to the ingress and egress endpoints 30 and 50 to exchange information between the call server 20 and the ingress endpoints 30 and 50, respectively.

The ingress endpoint 30 is the point at which a call is originated to go to the egress endpoint 50. The ingress endpoint 30 may be a media equipment such as a telephone unit, a private branch exchange (PBX), a teleconference station, or a server that serves media equipment. The ingress endpoint 30 may be implemented as a computer system one embodiment of which is illustrated in Figure 1B. The ingress endpoint 30 includes an ingress negotiation interface 40, a number of ingress codecs 32, a storage for codec parameters 34. The ingress negotiation interface 40 is responsible for the parameter negotiation for the selection of a suitable codec from the ingress codecs 32 used for voice over IP communication. The ingress negotiation interface 40 interface to the media gateway controller 10 at the ingress media interface 22, or alternatively, to the network 70 via a router (not shown). The ingress negotiation interface 40 is connected to an ingress data path 42, a switched circuit network 44, and an ingress digital signal processor (DSP) 46. The ingress data path 42 is the data path that carries the call. The ingress DSP 46 is a digital signal processor for the call.

The egress endpoint 50 is essentially similar to the ingress endpoint 30 except that the egress endpoint 50 is the destination of the call originated from the ingress endpoint 30. The egress endpoint 50 may be a media equipment such as a telephone unit, a private branch exchange (PBX), a teleconference station, or a server that serves media equipment. The egress endpoint 50 may be implemented as a computer system one embodiment of which is illustrated in Figure 1B. The egress endpoint 50 includes an egress negotiation interface 60, a number of egress codecs 52, and a storage for codec parameters 54. The egress negotiation interface 60 interface to the media gateway controller 10 at the egress media interface 24, or alternatively, to the network 70 via a router (not shown). The egress negotiation interface 60 is interfaced to egress data paths 62, a switched circuit network (SCN) 64 and egress DSP 66. The egress DSP 66 may be the same as the ingress DSP 46.

Figure 1B is a diagram illustrating a computer system 100 to implement the call server and the ingress and egress negotiation interfaces according to one embodiment of the invention. The computer system 100 includes a processor 105, a host bus 110, a host bridge chipset 120, a system memory 130, a primary PCI bus #0 155, K PCI slots 160₁ to 160_{K}, a PCI-to-ISA bridge 170, mass storage devices 172, Input/Output (I/O) ports 174, an ISA bus 180, and ISA slots 185₁ to 185_{M}.

The processor 105 represents a central processing unit of any type of architecture, such as complex instruction set computers (CISC), reduced instruction set computers (RISC), very long instruction word (VLIW), or hybrid architecture.

The host bridge chipset 120 includes a number of interface circuits to allow the host processor 105 access to the system memory 130 and the primary PCI bus #0 155. The system memory 130 represents one or more mechanisms for storing information. For example, the system memory 130 may include non-volatile or volatile memories. Examples of these memories include flash memory, read only memory (ROM), or random access memory (RAM). The system memory 130 contains a codec negotiation program 131, and other programs and data 138. The codec negotiation program 131 may include program code for the ingress and egress media interfaces 22 and 24 when the system 100 is used in the call server 20, or the ingress and egress negotiation interfaces 40 and 60 when the system 100 is used in the ingress and egress endpoints, respectively. Of course, the system memory 130 preferably contains additional software (not shown), which is not necessary to understanding the invention.

The PCI slots 160₁ to 160_{K} provide interfaces to PCI devices. Examples of PCI devices include the network interface and the media interface. The network interface connects to communication channel such as the Internet. The Internet provides access to on-line service providers, Web browsers, and other network channels. The media interface provides access to audio and video devices.

The PCI-to-ISA bridge 170 provides access to the ISA bus 180, mass storage devices 172, and I/O ports 174. The mass storage devices 172 include CD ROM, floppy diskettes, and hard drives. The ISA bus 180 has a number of ISA slots 185₁ to 185_{M} to interface to ISA devices. Examples of ISA devices include data entry devices (e.g., keyboard, mouse), printers, etc.

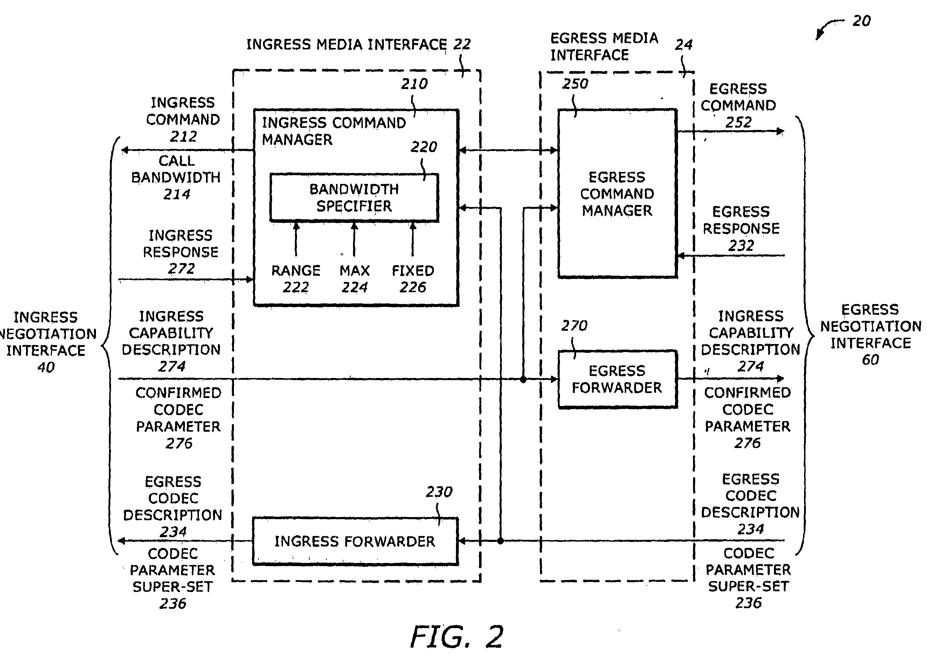

Figure 2 is a diagram illustrating the call server 20 shown in Figure 1A according to one embodiment of the invention. The call server 20 includes the ingress media interface 22 and an egress media interface 24.

The ingress media interface 22 includes an ingress command manager 210 and an ingress forwarder 230. The ingress command manager 210 and the ingress forwarder 230 may be implemented in a common module. The ingress command manager 210 issues an ingress command 212 to the ingress endpoint 30 via the ingress negotiation interface 40. The ingress command 212 may include a call bandwidth 214. The ingress command manager 210 includes a bandwidth specifier 220. The bandwidth specifier 220 specifies the call bandwidth 214 from a bandwidth range 222, a maximum bandwidth value 224, or a fixed bandwidth value 226. The bandwidth range 222, the maximum bandwidth value 224, and the fixed bandwidth value 226 can be expressed as "controlled flexibility" (with notation L : b: min - max, where min and max indicate the minimum and maximum values of the range), "flexibility" (with notation L : b: max, where max is the maximum value), and "no flexibility" (with notation L : b: fixed - fixed, where fixed is the fixed value), respectively. The ingress command manager 210 receives an ingress response 272 from the ingress negotiation interface 40. The ingress forwarder 230 receives an egress codec description 234 and the codec parameters supper-set 236 from the egress endpoint 50 via the egress negotiation interface 60. The ingress forwarder 230 forwards the egress codec description 234 and the codec parameters supper-set 236 to the ingress negotiation interface 40.

The egress media interface 24 includes an egress command manager 250 and an egress forwarder 270. The egress command manager 250 and the egress forwarder 270 may be implemented in a common module. The egress command manager 250 issues an egress command 252 to the egress endpoint 50 via the egress negotiation interface 60. The egress command manager 250 receives an egress response 232 from the egress negotiation interface 60. The egress forwarder 270 receives an ingress capability description 274 and confirmed codec parameters 276 from the ingress endpoint 30 via the ingress negotiation interface 40. The egress forwarder 270 forwards the ingress capability description 274 and confirmed codec parameters 276 to the egress negotiation interface 60.

The codec negotiation process takes place in two steps. In the first step, a codec is selected that satisfies the call bandwidth and is supported by both the ingress and egress endpoints 30 and 50. In the second step, codec parameters associated with the selected codec are selected. The media gateway controller 10 acts as an intermediary between the ingress and egress endpoints 30 and 50 to transfer messages containing the desired information.

In a typical call negotiation scenario, the ingress media interface 22 initiates the negotiation process by issuing the ingress command 212 to the ingress endpoint together with a bandwidth parameter 214 as part of the ingress command 212. In one embodiment, the ingress media interface 22 uses a session description protocol (SDP). Initially, the ingress command 212 may be a CRCX command and the connection parameter is media gateway controller parameter local connection (MGCP-L). This is the beginning of the first step of the 2-step codec negotiation. The bandwidth parameter is set according to the knowledge of the available bandwidth for the call or knowledge of the network traffic conditions at the time the call is made. This bandwidth parameter may be any one of the bandwidth range 222, the maximum bandwidth values 224, or a fixed bandwidth value 226.

Upon receipt of the CRCX command 212 from the ingress media interface 22, the ingress negotiation interface 40 decodes the command and the call bandwidth information 214. From this information, the ingress negotiation interface 40 selects the codecs from the codec list 32 (Figure 1A) within the capabilities of the ingress endpoint 30. For example, if the call bandwidth specifies a maximum bandwidth value of 50 Kilobits per second (Kbps), then the ingress negotiation interface 40 selects only codecs that have bandwidth capabilities less than 50 Kbps. The ingress negotiation interface 40 responds to the ingress command 212 and the call bandwidth 214 by sending an ingress response 272 acknowledging receipt of the ingress command 212. In addition the ingress negotiation interface 40 includes an ingress capability description 274 advertising the codec capabilities of the ingress endpoint 30 which satisfies the specified bandwidth requirements. The ingress capability description 274 may be a list of the preferred codecs selected from the codecs 32 (Figure 1A). The list is typically ordered according to some ordering criterion such as preference or priority.

The ingress media interface 22 may verify the ingress capability description 274 to make sure that the bandwidths are not outside the specified bandwidth in the call bandwidth 214. Then, the egress forwarder 270 forwards the ingress capability description 274 to the egress endpoint 50 via the egress negotiation interface 60. The egress command manager 250 issues an egress command 252, e.g., a CRCX command, to the egress negotiation interface 60 together with the ingress capability description 274.

Upon receipt of the egress command 252 and ingress capability description 274, the egress negotiation interface 60 selects from the ingress capability description 274 an egress codec that can support the call. This is the second step of the codec negotiation. The egress negotiation interface 60 responds to the egress command 252 by the egress response 232 and the egress codec description 234. The egress response 232 acknowledges receipt of the egress command 252 and provides the egress codec description 234. The egress codec description 234 includes further information 236 about the codec, including codec parameters, as part of the MGCP-L and the SDP description. Examples of the MGCP-L parameters include the packetization period as a range of supported values for the selected egress codec and a silence suppression option (e.g., OFF if silence suppression cannot be performed, and ON if silence suppression can be performed). Examples of the SDP description include packet lost protection protocol.

The egress command manager 250 informs the ingress command manager 210 of the receipt of the egress response 232. The ingress command manager 210 then issues the ingress command 212 to the ingress endpoint 30, e.g., an MDCX command. In addition, the ingress forwarder 230 forwards the egress codec description 234 and the codec parameters super-set 236 to the ingress negotiation interface 40.

Upon receipt of the ingress command 212 with the egress codec description 234 and the codec parameters super-set 236, the ingress negotiation interface 40 prepares to terminate the negotiation. The ingress negotiation interface 40 selects the final codec parameter values. The ingress negotiation interface 40 opens the reverse data path in the ingress data path 42 (Figure 1A) from the network 70 (Figure 1A) into the SCN 44. Then the ingress negotiation 40 loads the ingress DSP 46 with appropriate settings according to the selected codec and parameters. The ingress negotiation interface 40 then sends an ingress response 272 with an acknowledgment and confirmed codec parameters 276. The confirmed codec parameters 276 include the MGLP-L parameters such as the packetization period as selected from the range offered in the egress codec description 234 within the codec parameters super-set 236. If the egress codec description 234 does not offer a range, a specific packetization period is determined according to the value offered by the egress codec description 234 within the codec parameters super-set 236. The confirmed codec parameters 276 may also include other relevant information such as a confirmation of the packet loss protection protocol.

Upon receipt of the acknowledgment of the ingress command 212, e.g., the MDCX command, from the ingress negotiation interface 40, the ingress media interface 22 informs the egress media interface 24. The egress forwarder 270 then forwards the confirmed codec parameters 276 to the egress negotiation interface 60.

Upon receipt of the confirmed codec parameters 276, the egress negotiation interface 60 opens the reverse and forwards data paths in the egress data paths 62 (Figure 1A) and loads the egress DSP 66 with appropriate settings corresponding to the selected codec and codec parameters. The connection negotiation is then terminated.

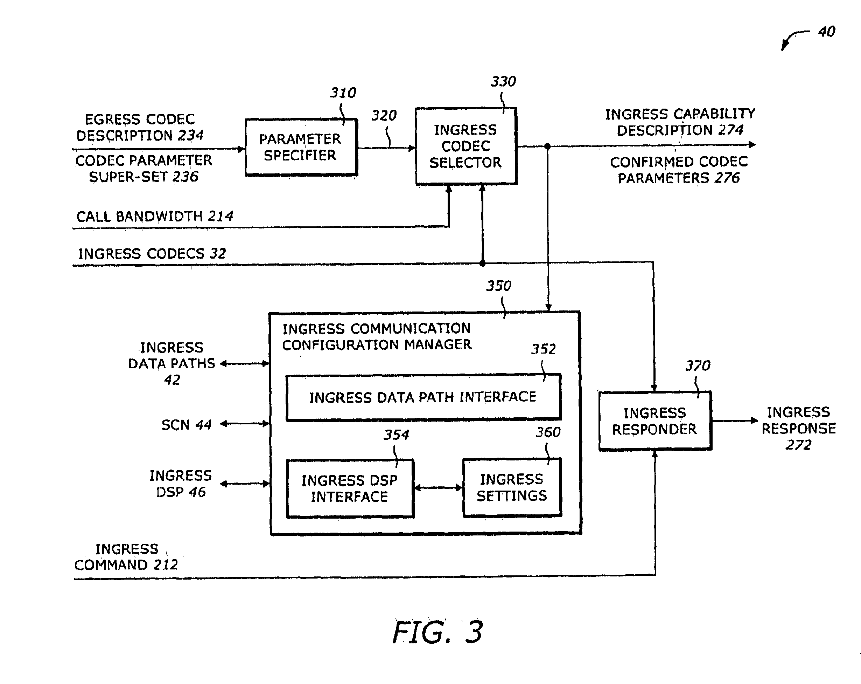

Figure 3 is a diagram illustrating the ingress negotiation interface 40 shown in Figure 1A according to one embodiment of the invention. The ingress negotiation interface 40 includes a parameter specifier 310, an ingress codec selector 330, an ingress codec communication configuration manager 350, and an ingress responder 370.

The parameter specifier 310 receives the egress codec description 234 and the codec parameters super-set 236 as provided by the egress endpoint 50 and selects a codec parameter subset 320. For example, this codec parameter subset 320 may include a specific packetization period from a range specified in the egress codec description 234 and the codec parameters super-set 236. The codec parameter subset 320 becomes the confirmed codec parameters 276 to be sent to the egress endpoint 50.

The ingress codec selector 330 receives the call bandwidth 214 in the first step of the negotiation and the codec parameter subset 320 in the second step of the negotiation. In the first step, the ingress codec selector 330 selects a codec list the ingress codecs 32 supported by the ingress endpoint 30 and satisfying the call bandwidth 214, and generates the ingress capability description 274. In the second step, the ingress codec selector 330 selects a specific codec that satisfies the codec parameter subset 320 and generates the confirmed codec parameter 276.

The ingress communication configuration manager 350 includes an ingress data path interface 352, an ingress DSP interface 354, and storage of settings 360. The ingress data path interface 352 interfaces to the ingress data paths 42 and the SCN 44 (Figure 1A) to open the reverse data path from the network 70 into the SCN 44 at the conclusion of the negotiation process. The ingress DSP interface 354 interfaces to the ingress DSP 46 and loads the settings 360 into the ingress DSP 46 at the conclusion of the negotiation according to the confirmed codec parameters 276.

The ingress responder 370 receives the ingress command 212 (e.g., the CRCX command in the first step and the MDCX command in the second step of the negotiation) and generates the ingress response 272. The ingress response 272 is typically an acknowledgement of receipt of the ingress command 212.

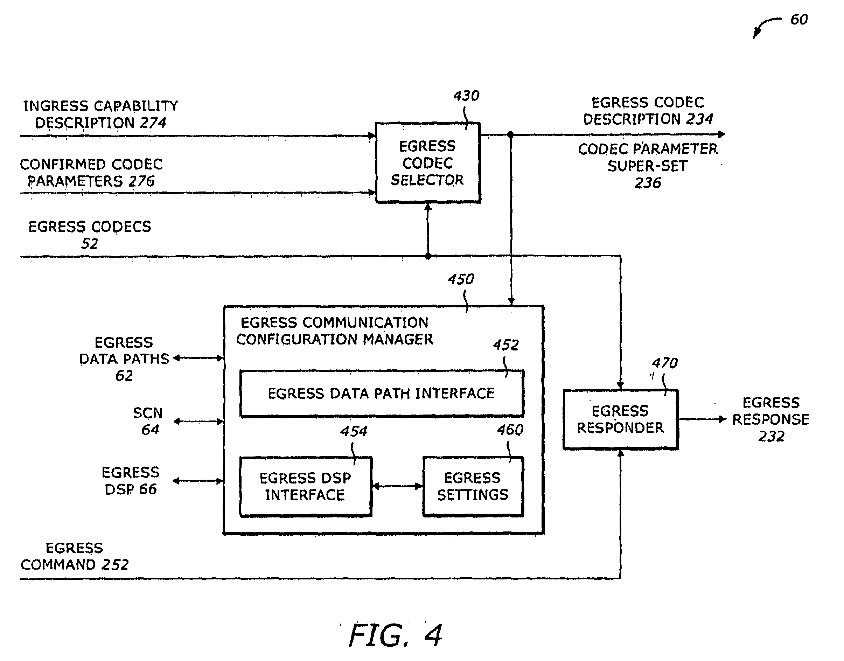

Figure 4 is a diagram illustrating the egress negotiation interface 60 shown in Figure 1A according to one embodiment of the invention. The egress negotiation interface 60 includes an egress codec selector 430, an egress codec communication configuration manager 450, and an egress responder 470.

The egress codec selector 430 receives the ingress capability description 274 in the first step of the negotiation and the confirmed codec parameters subset 276 in the second step of the negotiation. In the first step, the egress codec selector 430 selects a codec list from the egress codecs 52 supported by the egress endpoint 50 and satisfying the ingress capability description 274, and generates the egress codec description 234 which includes the codec parameters super-set 236. In the second step, the egress codec selector 430 selects a specific codec that satisfies the confirmed codec parameters 276.

The egress communication configuration manager 450 includes an egress data path interface 452, an egress DSP interface 454, and storage of settings 460. The egress data path interface 452 interfaces to the egress data paths 62 and SCN 64 (Figure 1A) to open the reverse and forward data paths from the network 70 at the conclusion of the negotiation process. The egress DSP interface 454 interfaces to the egress DSP 66 and loads the settings 460 into the egress DSP 66 at the conclusion of the negotiation according to the confirmed codec parameters 276.

The egress responder 470 receives the egress command 252 (e.g., the CRCX command in the first step and the MDCX command in the second step of the negotiation) and generates the egress response 232. The egress response 232 is typically an acknowledgement of receipt of the egress command 252.

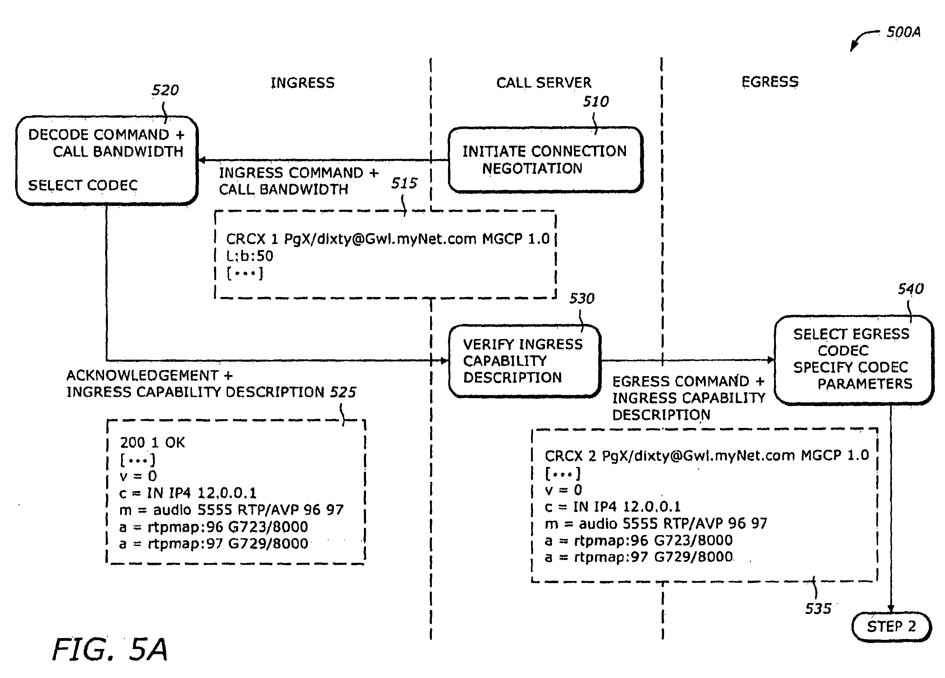

Figure 5A is a flow diagram 500A illustrating the first step of the negotiate process according to one embodiment of the invention. The flow diagram shows a sequence of actions and communications between the media gateway controller and the ingress and egress endpoints.

At the beginning, the media gateway controller initiates the connection negotiation process by issuing an ingress command and a call bandwidth requirement to the ingress (Block 510) as shown in a message 515. The message 515 shows the ingress command as CRCX command and a call bandwidth of a maximum value of 50 Kbps as indicated by the notation L : b: 50. The ingress receives the message 515, decodes the command and the call bandwidth, and selects the preferred codecs (Block 520). The ingress sends a response with an acknowledgment and the ingress capability description in a message 525. The message 525 shows the acknowledgement 200 1 OK and two available codecs: an SDP dynamic description 96 with G.723 8 KHz and an SDP dynamic description 97 with G.729 8 KHz.

The media gateway controller receives the message 525, verifies that the bandwidths are less then the specified maximum bandwidth of 50 Kbps (Block 530). The media gateway controller then issues an egress command and forwards the ingress capability description to the egress via a message 535. The message 535 shows the CRCX command and the two available codecs. The egress receives the egress command, selects the egress codec based on the ingress capability description for the two available codecs, and specifies the codec parameters from this list (Block 540). Then the egress goes to the second step of the negotiation.

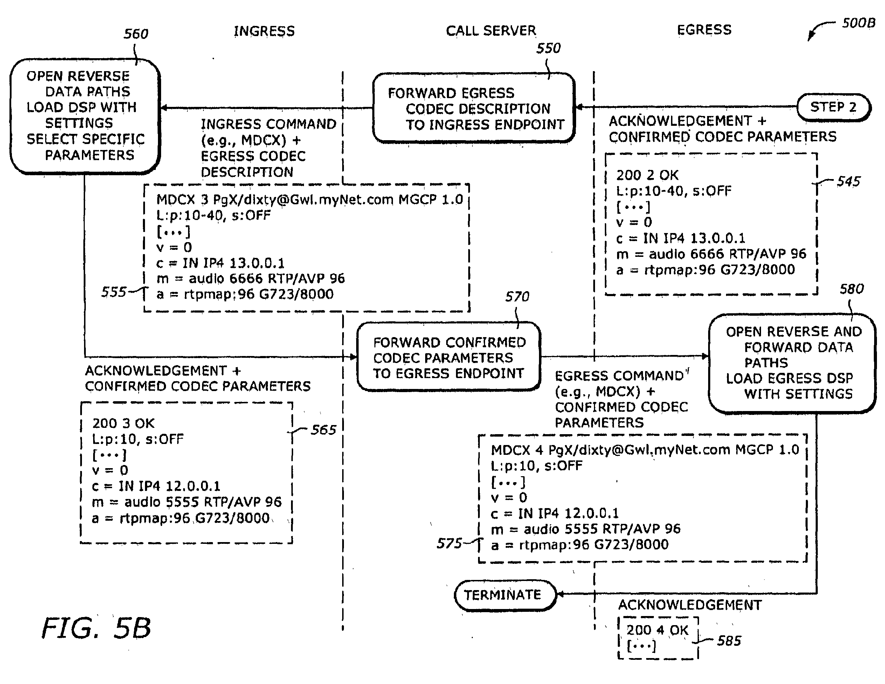

Figure 5B is a flow diagram illustrating the second step of the negotiate process according to one embodiment of the invention.

At the beginning of the second step, the egress sends a response to the media gateway controller with an acknowledgement and an egress codec description via a message 545. The message 545 shows the acknowledgement 200 2 OK and the selected codec of SDP dynamic description 96 G.723 8KHz. In addition, the egress codec description includes the MCGP-L indicating it can support a range of packetization period (with the notation L : p: 10 - 40) and it cannot do silence suppression (with the notation s = OFF). The media gateway controller forwards the acknowledgement and the egress codec description to the ingress (Block 550). The media gateway controller issues an ingress command and includes the egress codec description in a message 555. The message 555 shows a MDCX command and the selected codec and its parameters.

The ingress receives the ingress command and the egress codec description, opens the reverse data path, loads the ingress DSP with the appropriate settings, and selects specific parameters from the egress codec description (Block 560). The selected specific parameters become the confirmed codec parameters. The ingress sends an acknowledgment and confirmed codec parameters via a message *565*. The message *565* shows the acknowledgment 200 3 OK and the specific packetization period of 10 (from the range 10-40).

The media gateway controller forwards the confirmed codec parameters to the egress (Block 570). The media gateway controller issues an egress command and the confirmed codec parameters via a message 575. The message 575 shows the MDCX command with the confirmed codec parameters, including the specific packetization period of 10, the OFF silence suppression option, and the codec G.723 8Khz.

The egress receives the egress command and the confirmed codec parameters, opens the reverse and forward data paths, and loads the egress DSP with the appropriate settings (Block 580) according to the selected codec and the codec parameters (Block 580). The egress then sends an acknowledgement via a message 585 and concludes the negotiation process. The message 585 shows the acknowledgement 200 4 OK.

The connection negotiation is applicable for both the channel associated signaling (CAS) and common channel signaling (CCS) signaling cases.

While this invention has been described with reference to illustrative embodiments, this description is not intended to be construed in a limiting sense. Various modifications of the illustrative embodiments, as well as other embodiments of the invention, which are apparent to persons skilled in the art to which the invention pertains are deemed to lie within the spirit and scope of the invention.

## Claims

1. A method comprising:
selecting an egress codec to satisfy a capability description of an ingress endpoint, the egress codec having an egress codec description, the ingress and egress endpoints being associated with a network for a voice connection using a control protocol;
selecting an ingress codec to match a codec parameter subset from the egress codec description; and
configuring at least one communication path between the ingress and egress endpoints using the selected ingress and egress codecs and the codec parameter subset.

2. The method of claim 1 wherein selecting the egress codec comprises:
specifying a call bandwidth to the ingress endpoint in a command sent by a call server at a media gateway controller;
responding to the command by the ingress endpoint with a response including at least the ingress codec satisfying the call bandwidth;
forwarding the response to the egress endpoint; and
selecting the egress codec to match at least the said ingress codec from the capability description by the egress endpoint.

3. The method of claim 2 wherein selecting the ingress codec comprises:
providing the egress codec description corresponding to the selected egress codec;
forwarding the egress codec description to the ingress endpoint;
specifying the codec parameter subset from the egress codec description, the codec parameter subset being supported by the ingress codec; and
forwarding the codec parameter subset to the egress endpoint by the call server.

4. The method of claim 3 wherein configuring the or each communication path comprises:
opening an ingress reverse data path from the network into a switched circuit network (SCN) by the ingress endpoint;
loading an ingress data service provider (DSP) with settings corresponding to the selected ingress and egress codecs and the codec parameter subset;
opening an egress reverse data path and an egress forward data path by the egress endpoint; and
loading an egress DSP with settings corresponding to the selected egress codec and the codec parameter subset.

5. The method of claim 4 wherein specifying the call bandwidth comprises:
specifying one of a bandwidth range, a maximum bandwidth value, and a fixed bandwidth value.

6. The method of claim 5 wherein responding to the command comprises:
acknowledging receipt of the command; and
providing the capability description including the ingress codec.

7. The method of claim 6 wherein providing the egress codec description comprises:
providing connection parameters corresponding to the selected egress codec.

8. The method of claim 7 wherein providing the connection parameters comprises:
providing one of a packetization period and a silence suppression option.

9. The method of claim 8 wherein providing the egress codec description further comprises:
providing a packet lost protection protocol.

10. The method of claim 9 wherein specifying the codec parameter subset from the egress codec description comprises:
acknowledging receipt of the egress codec description corresponding to the selected egress codec; and
confirming the connection parameters.

11. The method of claim 10 wherein specifying the codec parameter subset from the egress codec description further comprises:
confirming the packet lost protection protocol.

12. The method of claim 11 wherein the voice connection is a voice over internet protocol (VoIP).

13. The method of claim 12 wherein the control protocol comprises a media gateway control protocol (MGCP) and a session description protocol (SDP).

14. A computer program product comprising:
a machine useable medium having computer program code embedded therein, the computer program product having:
computer readable program code to select an egress codec to satisfy a capability description of an ingress endpoint, the egress codec having an egress codec description, the ingress and egress endpoints being associated with a network for a voice connection using a control protocol;
computer readable program code to select an ingress codec to match a codec parameter subset from the egress codec description; and
computer readable program code to configure at least one communication path between the ingress and egress endpoints using the selected egress and ingress codecs and the codec parameter subset.

15. The computer program product of claim 14 wherein the computer readable program code to select the egress codec comprises:
computer readable program code to specify a call bandwidth to the ingress endpoint in a command sent by a call server at a media gateway controller;
computer readable program code to respond to the command by the ingress endpoint with a response including at least the ingress codec satisfying the call bandwidth;
computer readable program code to forward the response to the egress endpoint; and
computer readable program code to select at least the said egress codec to match the ingress codec from the capability description by the egress endpoint.

16. The computer program product of claim 15 wherein the computer readable program code to select the ingress codec comprises:
computer readable program code to provide the egress codec description corresponding to the selected egress codec;
computer readable program code to forward the egress codec description to the ingress endpoint;
computer readable program code to specify the codec parameter subset from the egress codec description, the codec parameter subset being supported by the ingress codec; and
computer readable program code to forward the codec parameter subset to the egress endpoint by the call server.

17. The computer program product of claim 16 wherein the computer readable program code to configure the or each communication path comprises:
computer readable program code to open an ingress reverse data path from the network into a switched circuit network (SCN) by the ingress endpoint;
computer readable program code to load an ingress data service provider (DSP) with settings corresponding to the selected ingress and egress codecs and codec parameter subset;
computer readable program code to open an egress reverse data path and an egress forward data path by the egress endpoint; and
computer readable program code to load an egress DSP with settings corresponding to the selected egress codec and the codec parameter subset.

18. The computer program product of claim 17 wherein the computer readable program code to specify the call bandwidth comprises:
computer readable program code to specify one of a bandwidth range, a maximum bandwidth value, and a fixed bandwidth value.

19. The computer program product of claim 18 wherein the computer readable program code to respond to the command comprises:
computer readable program code to acknowledge receipt of the command; and
computer readable program code to provide the capability description including the ingress codec.

20. The computer program product of claim 19 wherein the computer readable program code to provide the egress codec description comprises:
computer readable program code to provide connection parameters corresponding to the selected egress codec.

21. The computer program product of claim 20 wherein the computer readable program code to provide the connection parameters comprises:
computer readable program code to provide one of a packetization period and a silence suppression option.

22. The computer program product of claim 21 wherein the computer readable program code to provide the egress codec description further comprises:
computer readable program code to provide a packet lost protection protocol.

23. The computer program product of claim 22 wherein the computer readable program code to specify the codec parameter subset from the egress codec description comprises:
computer readable program code to acknowledge receipt of the egress codec description corresponding to the selected egress codec; and
computer readable program code to confirm the connection parameters.

24. The computer program product of claim 23 wherein the computer readable program code to specify the codec parameter subset from the egress codec description further comprises:
computer readable program code to confirm the packet lost protection protocol.

25. The computer program product of claim 24 wherein the voice connection is a voice over internet protocol (VoIP).

26. The computer program product of claim 25 wherein the control protocol comprises a media gateway control protocol (MGCP) and a session description protocol (SDP).

27. A system comprising:
a media gateway controller having a call server coupled to a network, the call server having ingress and egress media interfaces; and
an ingress endpoint and an egress endpoint coupled to the media gateway controller to negotiate connection between the ingress and egress endpoints for a voice connection, the ingress and egress endpoints having ingress and egress negotiation interfaces using a control protocol; and
wherein
the egress negotiation interface comprises:
an egress codec selector to select an egress codec satisfying an ingress capability description of the ingress endpoint, the egress codec having egress codec description, and
an egress communication configuration manager to configure at least an egress communication path using the selected egress codec, and
the ingress negotiation interface comprises:
an ingress codec selector to select an ingress codec to match a codec parameter subset from the egress codec description, and
an ingress communication configuration manager to configure at least an ingress communication paths using the selected ingress codec and codec parameter subset.

28. The system of claim 27 wherein the ingress media interface comprises:
an ingress command manager to send an ingress command to the ingress endpoint, the ingress command specifying a call bandwidth and the egress codec description to the ingress endpoint.

29. The system of claim 28 wherein the ingress negotiation interface comprises:
an ingress responder to respond to the command with a response including at least the ingress codec satisfying the call bandwidth; and
a parameter specifier to specify the codec parameter subset from the egress codec description, the codec parameter subset being supported by the ingress codec.

30. The system of claim 29 wherein the egress media interface comprises:
an egress command manager to send an egress command to the egress endpoint, the egress command specifying the ingress capability description and the codec parameter subset to the egress endpoint.

31. The system of claim 30 wherein the egress codec selector matches the egress codec with the ingress codec.

32. The system of claim 31 wherein the ingress communication configuration manager comprises:
an ingress data path interface to open an ingress reverse data path from the network into a switched circuit network (SCN); and
an ingress data service provider (DSP) interface to load an ingress DSP with settings corresponding to the selected ingress codec and the codec parameter subset.

33. The system of claim 32 wherein the egress communication configuration manager comprises:
an egress data path interface to open an egress reverse data path and an egress forward data path; and
an egress DSP interface to load an egress DSP with the settings corresponding to the selected egress codec and the codec parameter subset.

34. The system of claim 33 wherein the ingress media interface specifies one of a bandwidth range, a maximum bandwidth value, and a fixed bandwidth value.

35. The system of claim 34 wherein the egress negotiation interface comprises an egress responder to respond to the egress command from the call server with an egress response having connection parameters corresponding to the selected egress codec, the connection parameters including at least one of a packetization, a silence suppression option, and a packet loss protection protocol.

36. The system of claim 35 wherein the egress responder acknowledges receipt of the command from the call server.

37. The system of claim 35 wherein the ingress responder acknowledges receipt of the command, provides the ingress capability description including the ingress codec, acknowledges receipt of the egress codec description, and confirms the connection parameters.

38. The system of claim 27 wherein the voice connection is a voice over internet protocol (VoIP).

39. The system of claim 27 wherein the control protocol comprises a media gateway control protocol (MGCP) and a session description protocol (SDP).

40. A method comprising:
selecting an egress codec to satisfy a capability description of an ingress endpoint, the egress codec having an egress codec description, the ingress endpoint having an ingress codec matching a codec parameter subset from the egress codec description, the ingress endpoint being associated with a network for a voice connection using a control protocol.

41. The method of claim 40 further comprising:
configuring at least one communication path between the ingress endpoint and an egress endpoint associated with the network using the ingress and egress codecs and the codec parameter subset.

42. The method of claim 40 wherein selecting the egress codec comprises:
receiving a response from the ingress endpoint, the response including at least the ingress codec satisfying a call bandwidth;
selecting the egress codec to match at least the said ingress codec from the capability description by an egress endpoint associated with the network.

43. The method of claim 41 wherein configuring the or each communication path comprises:
opening an egress reverse data path and an egress forward data path by the egress endpoint; and
loading an egress data service provider (DSP) with settings corresponding to the selected egress codec and the codec parameter subset.

44. A method comprising:
selecting an ingress codec to match a codec parameter subset from an egress codec description provided by an egress codec, the egress codec satisfying a capability description of an ingress endpoint, the ingress endpoint being associated with a network for a voice connection using a control protocol.

45. The method of claim 44 further comprising:
configuring at least one communication path between the ingress endpoint and an egress endpoint associated with the network using the ingress and egress codecs and the codec parameter subset.

46. The method of claim 44 wherein selecting the ingress codec comprises:
receiving a command specifying a call bandwidth from a call server at a media gateway controller;
selecting at least the ingress codec satisfying the call bandwidth;
receiving the egress codec description from an egress endpoint associated with the network;
specifying the codec parameter subset from the egress codec description, the codec parameter subset being supported by the ingress codec; and
forwarding the codec parameter subset to the egress endpoint.

47. The method of claim 46 wherein receiving the egress codec description comprises:
receiving connection parameters corresponding to the selected egress codec.

48. The method of claim 47 wherein receiving the connection parameters comprises:
receiving one of a packetization period and a silence suppression option.

49. The method of claim 47 wherein receiving the egress codec description further comprises:
receiving a packet lost protection protocol.

50. The method of claim 48 wherein specifying the codec parameter subset from the egress codec description comprises:
acknowledging receipt of the egress codec description corresponding to the selected egress codec; and
confirming the connection parameters.

51. The method of claim 50 wherein specifying the codec parameter subset from the egress codec description further comprises:
confirming the packet lost protection protocol.

52. The method of claim 45 wherein configuring the or each communication path comprises:
opening an ingress reverse data path from the network into a switched circuit network (SCN) by the ingress endpoint; and
loading an ingress data service provider (DSP) with settings corresponding to the ingress and egress codecs and the codec parameter subset.

53. A method comprising:
managing a codec negotiation between ingress and egress endpoints associated with a network for a voice connection using a protocol to select an egress codec satisfying a capability description of the ingress codec and to select an ingress codec matching a codec parameter subset from an egress codec description of the egress codec.

54. The method of claim 53 wherein managing comprises:
initiating the codec negotiation;
forwarding the capability description from the ingress endpoint to the egress endpoint;
forwarding the egress codec description from the egress endpoint to the ingress endpoint; and
forwarding the codec parameter subset confirmed by the ingress endpoint to the egress endpoint.

55. The method of claim 54 wherein managing further comprises:
verifying the capability description.

56. The method of claim 54 wherein initiating the codec negotiation comprises:
sending a command to the ingress endpoint, the command specifying a call bandwidth; and
receiving a response from the ingress endpoint, the response including the capability description.

57. An apparatus comprising:
an egress codec selector to select an egress codec to satisfy a capability description of an ingress endpoint, the egress codec having an egress codec description, the ingress endpoint having an ingress codec matching a codec parameter subset from the egress codec description, the ingress endpoint being associated with a network for a voice connection using a control protocol.

58. The apparatus of claim 57 further comprising:
an egress communication configuration manager to configure at least one communication path between the ingress endpoint and an egress endpoint associated with the network using the ingress and egress codecs and the codec parameter subset.

59. The apparatus of claim 57 wherein the egress codec selector selects the egress codec to match at least the ingress codec from the capability description by an egress endpoint associated with the network, at least the said ingress codec being included in a response received from the ingress endpoint and satisfying a call bandwidth.

60. The apparatus of claim 58 wherein the egress communication configuration manager comprises:
an egress data path interface to open an egress reverse data path and an egress forward data path by the egress endpoint; and
an egress data service provider (DSP) interface to load an egress DSP with settings corresponding to the selected egress codec and the codec parameter subset.

61. An apparatus comprising:
an ingress codec selector to select an ingress codec to match a codec parameter subset from an egress codec description provided by an egress codec, the egress codec satisfying a capability description of an ingress endpoint, the ingress endpoint being associated with a network for a voice connection using a control protocol.

62. The apparatus of claim 61 further comprising:
an ingress communication configuration manager to configure at least one communication path between the ingress endpoint and an egress endpoint associated with the network using the ingress and egress codecs and the codec parameter subset.

63. The apparatus of claim 61 wherein the ingress codec selector selects at least the ingress codec satisfying a call bandwidth specified by a command from a call server at a media gateway controller.

64. The apparatus of claim 61 further comprising:
a parameter specifier to specify the codec parameter subset from the egress codec description received from an egress endpoint associated with the network, the codec parameter subset being supported by the ingress codec and forwarded to the egress endpoint.

65. The apparatus of claim 62 wherein the ingress communication configuration manager comprises:
an ingress data path interface to open an ingress reverse data path from the network into a switched circuit network (SCN) by the ingress endpoint; and
an ingress data service provider (DSP) interface to load an ingress DSP with settings corresponding to the ingress and egress codecs and the codec parameter subset.

66. An apparatus comprising:
a call server to manage a codec negotiation between ingress and egress endpoints associated with a network for a voice connection using a protocol to select an egress codec satisfying a capability description of the ingress codec and to select an ingress codec matching a codec parameter subset from an egress codec description of the egress codec.

67. The apparatus of claim 66 wherein the call server comprises:
an ingress command manager and an egress command manager to initiate the codec negotiation;
an egress forwarder to forward the capability description from the ingress endpoint and the codec parameter subset confirmed by the ingress endpoint to the egress endpoint;
an ingress forwarder to forward the egress codec description from the egress endpoint to the ingress endpoint.

68. The apparatus of claim 67 wherein the ingress command manager verifies the capability description.

69. The apparatus of claim 67 wherein the ingress command manager sends a command specifying a call bandwidth to the ingress endpoint, and receives a response including the capability description from the ingress endpoint.
